# EUROPÄISCHE PATENTSCHRIFT

(11) **EP 2 209 599 B1**
(45) Veröffentlichungstag und Bekanntmachung des Hinweises auf die Patenterteilung: **21.11.2012**
(21) Anmeldenummer: 08800435.3
(22) Anmeldetag: 22.09.2008
(51) Int. Cl.: B29B 9/06, B29B 9/16, C08J 3/12

(54) **VERFAHREN ZUR KRISTALLISATION VON KRISTALLISIERBAREN POLYMEREN MIT HOHER KLEBENEIGUNG**
METHOD FOR CRYSTALLIZING CRYSTALLIZABLE POLYMERS HAVING A HIGH TENDENCY TO AGGLOMERATE
PROCÉDÉ POUR CRISTALLISER DES POLYMÈRES CRISTALLISABLES PRÉSENTANT UNE TENDANCE À L'ADHÉSION ÉLEVÉE

(30) Priorität: 16.11.2007 DE 102007055242
(43) Veröffentlichungstag der Anmeldung: 28.07.2010
(73) Patentinhaber: Bühler AG, 9240 Uzwil (CH)
(72) Erfinder: CULBERT, Brent Allan, CH-9500 Wil (CH); CHRISTEL, Andreas, CH-9524 Zuzwil (CH); RODRIGUES, Mauricio, Bairro Sao Domingos C.E.P.: 37701 - 391 Pocos de Caldas - MG (BR)
(74) Vertreter: Hepp Wenger Ryffel AG
(86) Internationale Anmeldenummer: PCT/CH2008/000389
(87) Internationale Veröffentlichungsnummer: WO 2009/062321

(56) Entgegenhaltungen:
- WO-A-2005/044901
- WO-A-2006/127698
- WO-A-2007/025903

## Beschreibung

Verfahren zur Kristallisation von Polymeren werden in grossem Massstab angewandt, um die Lagerung, den Transport, die Behandlung oder Verarbeitung der Polymere zu erleichtern. Je nach Kristallisationsgeschwindigkeit der Polymere erfolgt die Kristallisation spontan bei der Herstellung von Polymerpartikeln oder es muss ein separater Prozessschritt zur Kristallisation durchgeführt werden. Je nach der Klebeneigung eines Polymeren müssen die Prozessbedingungen im Kristallisationsprozess so gewählt werden, dass ein stabiler Prozess gewährleistet ist, der die Bildung von verklebten Partikeln ausschliesst. Die Klebeneigung ist dabei von der Zusammensetzung des Polymeren aber auch von dessen Eintrittseigenschaften in den Kristallisationsprozess abhängig. Verschiedene Versuche wurden unternommen, um die Eintrittsbedingungen so zu verändern, dass die Klebeneigung von Polymeren abnimmt.

US3746688 (Berkau) beschreibt eine Reduzierung der Klebrigkeit von PET im Kristallisationsprozess durch vorgängiges mehrstündiges Trocknen.

US 3014011 (Zoetbrood) beschreibt eine Reduzierung der Klebrigkeit von PET im Kristallisationsprozess durch eine vorgängige Behandlung mit einem Quellmittel, wobei vor allem Wasser als Quellmittel zum Einsatz kommt.

Abgesehen vom gegenläufigen Einfluss, der hier dem Wasser im PET bei der Kristallisation zugeschrieben wird, sind derartige Prozesse zur Veränderung des Wassergehaltes aufwendig und benötigen lange Prozesszeiten. Es wird in keinem Fall darauf hingewiesen, dass sich der Prozess durch Kombination mit dem Granulierprozess deutlich vereinfachen lässt und dass sich die Klebrigkeit der Granulate vor der Kristallisation reduzieren lässt.

US5919872 (Tung et. al) beschreibt den Einsatz von Beschichtungsmitteln, um die Klebeneigung zu reduzieren. Solche Beschichtungsmittel verändern jedoch die Zusammensetzung des Polymeren, was nicht für jede Anwendung akzeptabel ist.

Eine Vielzahl von Patenten verbindet die Granulation mit einer nachfolgenden Kristallisation. (US3544525, Balint et. al; EP1203040, Borer et. al.; sowie US2005/0085620 Bruckmann), wobei die Granulate auf einer Temperatur gehalten werden, bei der eine Kristallisation erfolgt, was zu einem sofortigen Beginn der Kristallisation führt. Ein Reduzieren der Klebrigkeit vor der Kristallisation ist somit nicht möglich.

US7204945 (Bonner) beschreibt eine direkte Kombination der Granulation mit der nachfolgenden Kristallisation leicht unterhalb der Kristallisationstemperatur. Es wird aber nicht darauf hingewiesen, dass sich die Klebrigkeit der Granulate vor der Kristallisation reduzieren lässt.

WO06/021118 (Christel et. al.) beschreibt ein Verfahren, in dem ein vorgängiges Aufheizen von Polymerpartikeln vor der Kristallisation mittels Prozesswärme aus dem nachfolgenden Festphasenpolykondensationsprozess erfolgt. Es wird aber nicht darauf hingewiesen, dass sich die Klebrigkeit der Granulate vor der Kristallisation reduzieren lässt.

Es ist eine Aufgabe der vorliegenden Erfindung, unter Umgehung der oben erwähnten Nachteile ein Verfahren zur Verfügung zu stellen, das die Klebeneigung eines Polymeren reduziert.

Diese Aufgabe wird erfindungsgemäss gelöst, indem ein Verfahren zur Herstellung eines teilkristallinen Polymeren zur Verfügung gestellt wird, das die Schritte Herstellen einer Polymerschmelze aus einem kristallisierbaren Polymer, Formen von Partikeln und Verfestigen der Polymerschmelze, Kühlen der Partikel, Behandeln der Partikel und Kristallisation der Partikel umfasst, wobei die Behandlung zwischen dem Kühlen der Partikel und der Kristallisation der Partikel ein Schütteln für einen Zeitraum von mehr als 1 Minute bis zu weniger als 30 Minuten bei einer Temperatur, die unterhalb der Glasübergangstemperatur des Polymeren +10°C liegt, umfasst, und die Kristallisation auf thermischem Weg unter Wärmezufuhr erfolgt. Dadurch entstehen Polymerpartikel mit derart verminderter Klebeneigung, dass sich eine kontinuierliche Kristallisation mit deutlich geringerem Rückmischverhältnis erreichen lässt, wodurch sich die notwendige Verweilzeit zur Kristallisation verringert und sich somit auch die Grösse und der Energieverbrauch der benötigten Kristallisationsvorrichtungen verringert.

Geeignete Polymere sind kristallisierbare thermoplastische Polymere. Die Polymere werden durch eine Polymerisationsreaktion, wie zum Beispiel radikalische, anionische oder kationische Polymerisation, Polyaddition oder Polykondensation aus ihren Monomeren gewonnen. Polymere eines Polymertyps werden aus den gleichen Hauptmonomeren gewonnen. Eine begrenzte Menge weiterer Monomere, sogenannter Comonomere, kann dabei zum Einsatz kommen. Ein Beispiel ist Polyoxymethylen (POM), das üblicherweise durch kationische oder anionische Polymerisation aus seinem Monomeren Formaldehyd oder seinem Trimeren Trioxan hergestellt wird. Insbesondere handelt es sich um kristallisierbare thermoplastische Polykondensate, wie Polyamid, Polyester, Polykarbonat, Polyhydroxyalkanoate, Polylaktide oder deren Copolymere.

Polykondensate werden durch eine Polykondensationsreaktion unter Abspaltung eines niedermolekularen Reaktionsproduktes gewonnen. Dabei kann die Polykondensation direkt zwischen den Monomeren erfolgen oder über eine Zwischenstufe, die anschliessend durch Transesterifikation umgesetzt wird, wobei die Transesterifikation wiederum unter Abspaltung eines niedermolekularen Reaktionsproduktes oder durch Ringöffnungspolymerisation erfolgen kann. Im Wesentlichen ist das so gewonnene Polykondensat linear, wobei eine geringe Anzahl an Verzweigungen entstehen kann.

Polykondensate eines Polymertyps werden aus den gleichen Hauptmonomeren gewonnen. Eine begrenzte Menge weiterer Monomere, sogenannter Comonomere, kann dabei zum Einsatz kommen.

Bei Polyester handelt es sich dabei um ein Polymer, das üblicherweise durch Polykondensation aus seinen Monomeren, einer Diol-Komponente und einer Dikarbonsäure-Komponente, gewonnen wird. Verschiedene, meist lineare oder zyklische Diol-Komponenten kommen zum Einsatz. Ebenso können verschiedene meist aromatische Dikarbonsäure-Komponenten zum Einsatz kommen. Anstelle der Dikarbonsäure kann auch ihr entsprechender Dimethylester eingesetzt werden. Typische Beispiele der Polyester sind Polyethylenterephthalat (PET), Polybutylenterephthalat (PBT) und Polyethylennaphthalat (PEN), die entweder als Homopolymer oder als Copolymere zum Einsatz kommen.

Das Polyethylenterephthalat wird aus seinen Monomeren, einer Diol-Komponente und einer Dikarbonsäure-Komponente, gewonnen, wobei die Diol-Komponenten als Hauptmonomer aus Ethylenglykol (1,2 Ethandiol) und die Dikarbonsäure-Komponenten als Hauptmonomer aus Terephthalsäure besteht. Als Comonomere kommen weitere lineare, zyklische oder aromatische Diol- und Dikarbonsäureverbindungen in Frage. Typische Comonomere sind Diethylenglykol (DEG), Isophthalsäure (IPA) oder 1,4-Bishydroxymethyl-cyclohexan (CHDM). Geeignete Polyethylenterephthalate weisen eine intrinsische Viskosität im Bereich von 0.3 bis 1dl/g auf, gemessen mit 0.5g PET in 100ml Phenol / Dichlorbenzol (1:1).

Bei Polyhydroxyalkanoaten handelt es sich um Polymere, die durch Polykondensation aus seinen Monomeren, mit der allgemeinen Formel HO-CH(R)-(CH2)n-COOH gewonnen werden, wobei R üblicherweise einen aliphatischen Kohlenwasserstoff mit 1 bis 15 Kohlenstoffatomen darstellt und n = 1 bis 10, üblicherweise 1 bis 3 beträgt. Ein typisches Beispiel ist Polyhydroxybutyrat mit R = CH3 und n = 1.

Bei den Polylaktiden (bekannt als Polylactic acid, PLA) handelt es sich um Polymere, die direkt unter Wasserabspaltung aus Milchsäure oder durch Ringöffnungspolymerisation aus seinen zyklischen Dimeren (Lactiden) gewonnen werden können.

Bei dem Polymer kann es sich um ein Neumaterial oder um ein Rezyklat handeln. Als Rezyklate werden wiederaufbereitete Polymere aus den Herstell- und Verarbeitungsprozessen (post industrial) oder nach dem Konsumentengebrauch gesammelte und wiederaufbereitete Polymere (post consumer) bezeichnet.

Dem Polymeren können Additive zugegeben werden. Als Additive eignen sich zum Beispiel Katalysatoren, Farbstoffe und Pigmente, UV Blocker, Verarbeitungshilfsmittel, Stabilisatoren, Schlagzähmodifikatoren, Treibmittel chemischer und physikalischer Art, Füllstoffe, Nukleierungsmittel, Flammhemmungsmittel, Weichmacher, Barriere oder mechanische Eigenschaften verbessernde Partikel, verstärkende Körper, wie Kugeln oder Fasern, sowie reaktive Substanzen, wie zum Beispiel Sauerstoffabsorber, Acetaldehydabsorber oder molekulargewichtserhöhende Substanzen usw.

Das Herstellen einer Polymerschmelze erfolgt in im Stand der Technik bekannten Apparaten oder Reaktoren. Grundsätzlich kommen Polymerisationsreaktoren in Frage, in denen Polymere in flüssiger Phase hergestellt werden, wie zum Beispiel Rührkessel, Käfigreaktoren oder Scheibenreaktoren, oder Apparaturen, in denen zuvor hergestellte Polymere aufgeschmolzen werden, wie zum Beispiel Extruder oder Kneter. Die Polymerschmelzeherstellung kann kontinuierlich oder batchweise erfolgen. Für die weitere Verarbeitung sind aber kontinuierliche Prozesse bevorzugt.

Unerwünschte flüchtige Substanzen, wie Verunreinigungen aus einem Rezyklat, verbleibende Lösemittel aus der Polymerherstellung sowie Monomere, Dimere, Oligomere oder Spaltprodukte aus der Polymerschmelzeherstellung können über eine Entgasungsvorrichtung, wie Dünnschichtverdampfer oder Extruder, insbesondere Mehrwellenextruder, wie Zweiwellenextruder oder Ringextruder, entfernt werden. Zur Aufbereitung einer Polymerschmelze können weitere Prozessschritte wie zum Beispiel eine Druckerzeugung, eine Filtration, eine Temperierung oder ein Mischen gehören.

Die Partikel können aus der Polymerschmelze auf verschiedene Arten geformt werden. Anwendbar ist ein Zerkleinern von Brocken, Strängen oder Bändern, die aus der Polymerschmelze geformt wurden, oder ein direktes Formen von Partikeln zum Beispiel durch Vertropfen oder Zerstäuben.

Die meiste Anwendung finden Verfahren zur Granulation, wobei in einer Austrittsvorrichtung, insbesondere einer Düse oder Düsenplatte, aus der Polymerschmelze einzelne Polymerstränge geformt werden. Zur Herstellung von Granulaten aus den Polymersträngen können die im Stand der Technik bekannten Granulationstechniken, wie Stranggranulation, Wasserringgranulation, Unterwassergranulation oder Kopfgranulation (auch hot face - Granulation), Vertropfung oder Versprühung verwendet werden. Dabei werden die Polymerstränge, die aus den Schmelzekanälen austreten, verfestigt und in eine Vielzahl an einzelnen Granulaten aufgetrennt, wobei das Auftrennen vor oder nach dem Verfestigen erfolgen kann.

Trotz der Verwendung des Begriffs "Wasser" in der Bezeichnung der Granulationseinrichtungen können auch andere flüssige Medien verwendet werden.

Das Auftrennen zu Partikeln erfolgt zum Beispiel durch eine selbstständige Tropfenbildung, durch den Einsatz eines flüssigen Schermediums oder durch ein mechanisches Trennen, insbesondere Schneiden. Während eine selbstständige oder eine durch ein Schermedium erzwungene Tropfenbildung am Düsenaustritt erfolgt, kann ein Schneiden sowohl direkt am Düsenaustritt erfolgen oder aber erst nach dem Durchlaufen einer Behandlungsstrecke.

Das Verfestigen der Polymerschmelze erfolgt durch Kühlen mit Hilfe eines oder mehrerer Kühlfluide, wobei es sich um gasförmige (z. B. Luft, Stickstoff oder CO2) oder flüssige (z. B. Wasser oder Ethylenglykol) Kühlmedien oder eine Kombination daraus handeln kann. Wird ein flüssiges Kühlmedium verwendet, so muss dies nachträglich von den Partikeln abgetrennt werden. Dies kann zum Beispiel durch Absaugen, durch einen Gasstrom, durch einen Pralltrockner oder einen Zentrifugaltrockner erfolgen.

Die mittlere Partikelgrösse soll zwischen 0.5mm und 10mm, bevorzugterweise zwischen 1.5mm und 5mm und insbesondere zwischen 2 und 3.5mm liegen. Als mittlere Partikelgrösse gilt der statistische Mittelwert des mittleren Partikeldurchmessers, der sich aus dem Durchschnitt aus Partikelhöhe, -länge und -breite ergibt.

Das bevorzugte Granulatgewicht beträgt zwischen 2 und 100mg, insbesondere über 5mg, besonders bevorzugt über 10mg und insbesondere unter 50mg, besonders bevorzugt unter 30mg.

Die Partikel sollen bevorzugterweise eine definierte Granulatform, wie zum Beispiel zylinderförmig, kugelförmig, tropfenförmig, kugelähnlich oder einer Design-Form, wie sie zum Beispiel in EP 0541 674 (Yau) vorgeschlagen ist, aufweisen. Es können solide Partikel oder poröse Partikel, die zum Beispiel durch Sinterung, Schäumung und dergleichen gewonnen werden, verwendet werden.

Das Kühlen der Partikel kann als Bestandteil der Partikelherstellung erfolgen oder nach der Partikelherstellung fortgesetzt werden. Es kann das gleichen Kühlfluid wie bei der Partikelherstellung verwendet werden. Es können aber auch andere Kühlfluide verwendet werden. Alternativ können auch andere im Stand der Technik bekannte Kühlvorrichtungen verwendet werden.

Die Kontaktbedingungen von Kühlmedium und Polymerpartikeln sollen so gewählt werden, dass der Kristallisationsgrad der Polymerpartikel nach dem Kühlen weniger als 10% beträgt, insbesondere weniger als 5% beträgt.

Nach dem Formen der Polymerpartikel erfolgt ein Schritt zur zumindest teilweisen Kristallisation, gemäss den im Stand der Technik bekannten Verfahren in einem Kristallisationsreaktor. Die Kristallisation kann kontinuierlich oder batchweise erfolgen. Die Kristallisation erfolgt auf thermischen Weg. Die dazu notwendige Wärmezufuhr kann über eine beheizte Wand des Kristallisationsreaktors, über beheizte Einbauten im Kristallisationsreaktor, durch Strahlung oder durch Einblasen eines heissen Prozessgases erfolgen.

Die Kristallisation soll bei einer geeigneten Temperatur über eine geeignete Verweilzeit erfolgen. Durch die Kristallisation soll zumindest ein Kristallisationsgrad erreicht werden, der eine weitere thermische Behandlung, wie zum Beispiel eine Trocknung oder eine Festphasen-Polykondensation erlaubt, ohne dass es dort zu Verklebungen oder Klumpenbildungen kommt.

Der geeignete Temperaturbereich wird ersichtlich, wenn man die Kristallisationshalbwertszeit (t½) gemessen im DSC als Funktion der Temperatur aufzeichnet. Er ist nach oben und unten begrenzt durch die Temperatur, bei der die Kristallisationshalbwertszeit das ungefähr 10-Fache der minimalen Kristallisationshalbwertszeit t½min erreicht. Da sehr kurze Kristallisationshalbwertszeiten (t½) nur schwer bestimmbar sind, wird als Minimalwert t½min = 1 Minute eingesetzt.

Die geeignete Kristallisationszeit ergibt sich aus der Zeit, um das Produkt auf die Kristallisationstemperatur aufzuheizen, plus zumindest der Kristallisationshalbwertszeit bei der gegebenen Temperatur, wobei bevorzugterweise 2 - 20 Halbwertszeiten zur Aufheizzeit dazugezählt werden, um eine ausreichende Kristallisation zu erreichen.

Bei Polyethylenterephthalat liegt der Temperaturbereich zwischen 100 und 220°C, und es wird ein Kristallisationsgrad von zumindest 20%, bevorzugterweise von zumindest 30% erreicht.

Um ein Verkleben der kristallisierenden Polymerpartikel zu verhindern, sollen diese relativ zueinander in Bewegung gehalten werden. Dies kann zum Beispiel durch den Einsatz eines Rührwerkes, eines bewegten Behälters oder unter Einwirkung eines Fluidisierungsgases erfolgen.

Geeignete Kristallisationsreaktoren sind vibrierende Reaktoren, drehende Reaktoren, Reaktoren mit Rührwerken, sowie Reaktoren, die von einem Prozessgas durchströmt werden, wobei die Strömungsgeschwindigkeit des Prozessgases ausreichen muss, um die Polymerpartikel zu bewegen. Besonders geeignete Kristallisationsreaktoren sind Fliessbett- oder Wirbelbettkristallisatoren.

Gleichzeitig mit dem Anheben des Kristallisationsgrades werden auch allfällige Reste einer Flüssigkeit aus dem Granulierprozess entfernt.

Wird im Kristallisationsprozess ein Prozessgas im Kreislauf verwendet, so muss diesem genügend Frischgas oder gereinigtes Prozessgas zugesetzt werden, um eine übermässige Anreicherung der Flüssigkeit zu verhindern. Als Prozessgase können zum Beispiel Luft, Stickstoff, CO2, Wasserdampf oder Gemische daraus zum Einsatz kommen.

Mehrere Vorrichtungen zur Herstellung von Partikeln können mit einer Kristallisationsvorrichtung verbunden sein. Daraus ergibt sich der Vorteil, dass bei alternierendem Betrieb mehrerer Vorrichtungen zur Herstellung von Partikeln eine konstante Partikelmenge der Kristallisationsvorrichtung zugeführt wird.

Optional erfolgt nach dem Schritt zum Anheben des Kristallisationsgrades ein weiterer Schritt zur thermischen Behandlung. Die thermische Behandlung kann im Vakuum oder unter Durchströmung eines Gases erfolgen. Dabei kann es sich um einen Schritt zur weiteren Ausbildung der Kristallstruktur, um einen Schritt zur Trocknung oder Befeuchtung, um einen Schritt zur Festphasenpolykondensation (SSP) und/oder um einen Schritt zur Entfernung unerwünschter flüchtiger Substanzen, wie Verunreinigungen aus einem Rezyklat, verbleibende Lösemittel aus der Polymerherstellung sowie Monomere, Dimere, Oligomere oder Spaltprodukte aus der Polymerschmelzeherstellung, handeln. Beispiele für die Entfernung von unerwünschten Substanzen sind die Entfernung von Restmonomeren oder Dimeren aus Polyamiden, Polyhydroxyalkanoaten oder Polylaktiden, sowie die Entfernung von Verunreinigungen aus regranuliertem PET Flaschenmaterial. SSP Verfahren sind im Stand der Technik ausreichend bekannt und werden zum Beispiel in Modern Polyesters beschrieben. (Modem Polyesters, Wiley Series in Polymer Science, Edited by J. Scheirs, T. Long; John Wiley & Sons; 2003).

Direkt nach der Kristallisation oder im Anschluss an den weiteren Schritt zur thermischen Behandlung können die Polymerpartikel auf eine zur Lagerung geeignete Temperatur abgekühlt werden. Die Kühlung erfolgt dabei durch im Stand der Technik bekannte Verfahren, zum Beispiel in Plattenwärmetauschem, in Fliessbettkühlern, in Förderanlagen mit einem Überschuss an Kühlmedium, durch direkten Eintrag in eine Kühlflüssigkeit oder durch Kontakt mit einer kalten Oberfläche. Später können die Polymerpartikel zu Produkten wie zum Beispiel Fasern, Bändern, Rohren, Folien, Extrusionsblasteilen, Spritzgussteilen oder Sinterteilen verarbeitet werden. Polyethylenterephthalat wird zum Beispiel zu einem grossen Teil zu Hohlkörpern, insbesondere Flaschen verarbeitet.

Die Polymerpartikel können auch direkt nach der Kristallisation oder im Anschluss an den weiteren Schritt zur thermischen Behandlung zu Produkten verarbeitet werden.

Erfindungsgemäss erfolgt zwischen dem Kühlen der Partikel und der Kristallisation der Partikel ein Schritt zur Behandlung der Partikel, zur Reduktion ihrer Klebeneigung. - Überraschenderweise lässt sich diese Behandlung bei relativ geringen Temperaturen, in kurzer Zeit durchführen. Dazu ist es nötig, die Polymerpartikel einem Energieeintrag durch Schütteln auszusetzen.

Als Schütteln wird dabei jede Form der Verursachung häufiger mechanische Stösse auf die Polymerpartikel bezeichnet. Das Schütteln kann dabei direkt durch eine bewegte Oberfläche, also durch Übertragung mechanischer Energie erfolgen. Das Schütteln kann auch indirekt durch ein Fluid derart erfolgen, dass die Partikel häufigen Zusammenstössen mit anderen Partikeln oder festen Oberflächen ausgesetzt werden. Ebenso ist ein Schütteln durch Übertragung von mechanischen Wellen wie Schallwellen denkbar, durch die die Partikel angeregt werden können. Eine weitere Möglichkeit besteht in der Anwendung von elektromagnetischen Wellen, wobei hier eine Anregung der Partikel von innen, also durch Anregung von Bestandteilen innerhalb der Partikel erfolgt. Ein Beispiel dafür ist die Anregung von Wassermolekülen, die im Partikel gelöst sein können, durch Mikrowellen, insbesondere gepulste Mikrowellen, d.h. Mikrowellen-Stösse.

Erfindungsgemäss erfolgt das Schütteln bei einer Temperatur T1, wobei T1 unterhalb der Glasübergangstemperatur (Tg) des Polymeren plus 10°C beträgt. (T1 < Tg + 10°C). Als Untergrenze gilt eine Temperatur T1 > Tg - 60°C, insbesondere T1 > Tg - 40°C, besonders bevorzugt T1 > Tg - 30°C. Als Obergrenze ist eine Temperatur T1 < Tg + 5°C, insbesondere T1 < Tg bevorzugt. Handelt es sich bei dem Polymeren um ein Polyethylenterephthalat oder eines seiner Co-Polymere, so liegt die Temperatur T1 bevorzugt im Bereich 30°C bis 85°C, insbesondere im Bereich 50°C bis 80°C.

Die Partikel werden im vorgängigen Kühlschritt auf eine Temperatur T2 abgekühlt. Die erfindungsgemässe Behandlung lässt sich erreichen, wenn das Kühlen der Partikel auf eine Temperatur T2 im Bereich Tg - 60°C bis Tg + 10°C, insbesondere auf eine Temperatur T2 im Bereich Tg - 40°C bis Tg + 5°C erfolgt. Die Behandlung kann dann direkt anschliessend an das Kühlen erfolgen. Eine Lagerung oder Pufferung der Partikel zwischen den beiden Schritten (Kühlen und Behandeln), ist nur möglich, wenn die Temperatur der Partikel dabei nicht unter eine geeignete Temperatur T1 fällt.

Alternativ lässt sich die erfindungsgemässe Behandlung erreichen, wenn das Kühlen der Partikel auf eine Temperatur T2 unter Tg - 40°C, insbesondere unter Tg-60°C erfolgt. Dies ermöglicht eine längerfristige Lagerung und/oder einen Transport, wenn die beiden Schritte (Kühlen und Behandeln) örtlich voneinander getrennt stattfinden. Vorgängig zur Behandlung erfolgt dann ein Aufheizen auf eine geeignete Temperatur T1. Das Aufheizen und die Behandlung können in getrennten Apparaten stattfinden. Bevorzugterweise findet das Aufheizen und die Behandlung im gleichen Apparat statt. Besonders geeignet dazu sind Apparate, in denen die Partikel mit Hilfe eines heissen Prozessgases verwirbelt werden, wie zum Beispiel Fliessbett- oder Wirbelbettapparate. Durch den erhitzten Gasstrom erfolgt gleichzeitig ein Aufheizen und ein Schütteln. Üblicherweise soll dabei die Temperatur des Prozessgases eine Temperatur Tg des Polymeren plus 20°C nicht übersteigen, da die noch amorphen Partikel über ihrem Tg eine sehr hohe Klebrigkeit aufweisen können. Als Prozessgas können beliebige Gase benutzt werden, so lange sie die Eigenschaften der Polymere nicht beeinträchtigen. Üblicherweise werden Luft, Stickstoff, Wasserdampf oder CO2 verwendet. Es können aber auch Gase, die eine Quellwirkung auf das Polymer haben eingesetzt werden.

Die Glasübergangstemperatur (auch Glasübergangspunkt Tg) wird mittels Differential Scanning Calorimetry (DSC) bestimmt und entspricht dabei der Temperatur des Wendepunkts im Bereich des Übergangs der amorphen Phase vom Glaszustand in den plastischen Zustand. Gemessen wird der Tg an trockenem Produkt bei einer Aufheizrate von 10°C/min.

Die benötigte Dauer des Schüttelns hängt stark von der Art und Intensität des Schüttelns ab. Gemäss einer Ausführung der vorliegenden Erfindung soll die Intensität und Dauer des Schüttelns so gewählt wird, dass sich die Klebeneigung der Partikel im anschliessenden Kristallisationsprozess um zumindest einen Faktor 2 reduziert oder ganz verschwindet. Die Bestimmung der Klebeneigung erfolgt dabei mittels eines standardisierten Klebrigkeitstests.

Zur Beurteilung der Klebrigkeit eines Polymeren im Kristallisationsprozess werden Polymerpartikel in einen Zylinder mit einem Siebblechboden mittels eines Prozessgases bei einer geeigneten Kristallisationstemperatur so lange kristallisiert, bis eine primäre Kristallisation im Wesentlichen abgeschlossen ist. Polymere mit hoher Klebeneigung verkleben dabei zu grossen Agglomeraten oder sogar zu einem agglomerierten Block.

Die Menge an Prozessgas wird so gewählt, dass die Gasgeschwindigkeit im Zylinder deutlich über der Lockerungsgeschwindigkeit der Polymerpartikel liegt. Anschliessend werden die verklebten Polymerpartikel Druckstössen ausgesetzt, bis sich die Agglomerate lösen und zu einzelnen Granulaten zerfallen. Die Anzahl Druckstösse bei einem gegebenem Druck entspricht der Klebeneigung der Partikel im Kristallisationsprozess.

Gemäss einer weiteren Ausführung der vorliegenden Erfindung soll die Intensität und Dauer des Schüttelns so gewählt werden, dass sich der Tg Sprung im DSC um zumindest einen Faktor 1.2, insbesondere um einen Faktor 1.3 vergrössert. Eine solche Tg Sprung Erhöhung ist bekannt aus T. Yoshii et.al. Thermochimica Acta 431 (2005) 177-181. Hier erfolgt die Behandlung allerdings rein thermisch, und es sind sehr lange Behandlungszeiten notwendig. Beschrieben ist eine Zeit von grösser 170 Stunden. Erfindungsgemäss ist die Behandlung durch Schütteln wesentlich kürzer, nämlich im Bereich einer maximalen Behandlungszeit von weniger als 30 Minuten, und einer minimalen Behandlungszeit von mehr als 1 Minute.

Als Tg Sprung im DSC wird die endotherme Verschiebung des Wärmefluss-Signals in mW beim Überschreiten der Glasübergangstemperatur bezeichnet. Gemessen wird der Tg Sprung an trockenem Produkt bei einer Aufheizrate von 10°C/min. Der Tg Sprung ergibt sich aus der Multiplikation der Steigung im Wendepunkt mit der Zeitdifferenz zwischen Onset und Endset. Der Onset ergibt sich dabei aus dem Schnittpunkt zwischen der Basislinie vor dem Glasübergang und der verlängerten Steigung im Wendepunkt. Der Endset ergibt sich dabei aus dem Schnittpunkt zwischen der Basislinie nach dem Glasübergang und der verlängerten Steigung im Wendepunkt. Befindet sich zu Beginn oder am Ende des Glasübergangs ein Peak, so wird das extrapolierte Peak Maximum als Onset respektive Endset verwendet. Der Tg Sprung muss an Proben mit gleichem Gewicht gemessen werden oder auf eine Gewichtseinheit standardisiert werden.

Die Intensität des Schüttelns ergibt sich aus der Anzahl der Stösse, die auf jeden Partikel durchschnittlich übertragen wird, und aus der Energie, die pro Stoss durchschnittlich übertragen wird.

Gemäss einer bevorzugten Ausführung beträgt die durchschnittliche Anzahl der Stösse mehr als 150, insbesondere mehr als 300, besonders bevorzugt mehr als 500. Dadurch ist eine gleichmässige Behandlung der gesamten Oberfläche gewährleistet, wodurch eine effektive Reduktion der Klebrigkeit im nachfolgenden Kristallisationsprozess gewährleistet ist. Eine Obergrenze ergibt sich aus der maximalen Behandlungszeit (30 Minuten) und der maximal möglichen Anzahl Stösse pro Sekunde, die für eine mechanisch bewegte Vorrichtung mit 100 und für eine Vorrichtung, in der das Schütteln indirekt durch ein Fluid erfolgt, mit 10 angenommen wird. Daraus ergeben sich 180'000, respektive 18'000 Stösse. Die bevorzugte Frequenz für mechanisch bewegte Vorrichtungen liegt bei unter 50, insbesondere unter 20 Stössen pro Sekunde, wodurch sich die maximal mögliche Anzahl Stösse auf 90'000, insbesondere 36'000 reduziert. Die bevorzugte Frequenz für indirekt durch ein Fluid bewegte Vorrichtungen liegt bei unter 5, insbesondere unter 3 Stösse pro Sekunde, wodurch sich die maximal mögliche Anzahl Stösse auf 9'000, insbesondere 5'400 reduziert.

Die Anzahl Stösse berechnet sich aus der Verweilzeit, geteilt durch die Zykluszeit, multipliziert mit der Anzahl Stösse pro Zyklus. Für kontinuierliche Prozesse wird die mittlere Verweilzeit verwendet. Die Zykluszeit (t) ist apparatespezifisch vorgegeben, lässt sich einstellen oder ergibt sich aus den Prozessbedingungen. So ist zum Beispiel bei einem Rüttelsieb die Frequenz bekannt. Bei einer drehenden Trommel ist die Umdrehungszahl bekannt. Bei einer Wirbelschicht, die durch einen pulsierenden Gasstrom erzeugt wird ist die Pulsationsfrequenz bekannt.

Bei einer Wirbelschicht im konstanten Gasstrom ergibt sich die Zykluszeit aus der Expansionshöhe (h) der Wirbelschicht folgendermassen:

Die Zykluszeit (t) entspricht dem Anstieg (mit der Anstiegszeit ta) und Fall (mit der Fallzeit tf) der Partikel auf die Expansionshöhe (h). t = ta + tf mit ta = 2 * h / v0 und tf = 2 * h / v0.

Die dazu benötigte Anfangsgeschwindigkeit, respektive die resultierende Endgeschwindigkeit (v0) berechnet sich aus v0 = Wurzel (2 * g * h), wobei g = 9.81 m/s^2 ist. Die Expansionshöhe (h) entspricht dabei dem Höhenunterschied der expandierten Wirbelschicht zur ruhenden Schicht.

Die Anzahl Stösse pro Zyklus kann meist nur abgeschätzt werden.

Grundsätzlich erfolgt bei einer vertikalen Auf/Ab-Bewegung ohne Restriktion nach oben 1 Stoss pro Zyklus. Bei einer horizontalen Rechts/Links-Bewegung ergeben sich 2 Stösse pro Zyklus. Bei komplexen Bewegungen wird vereinfacht 1 Stoss pro Zyklus verwendet.

In einer drehenden Trommel sind die Anzahl Stösse stark vom Füllgrad und der Art und Anzahl von Einbauten abhängig. In einer wenig gefüllten Trommel mit zumindest 2 Produktmitnehmem werden 2 Stösse pro Umdrehung verwendet.

Die Energie die pro Stoss durchschnittlich übertragen wird, muss ausreichend sein, um eine Veränderung der Oberflächenstruktur derart zu gewährleisten, dass eine effektive Reduktion der Klebrigkeit im nachfolgenden Kristallisationsprozess gewährleistet ist. Gemäss einer bevorzugten Ausführung beträgt der durchschnittliche spezifische kinetische Energieeintrag pro Stoss mehr als 0.1 J/kg, insbesondere mehr als 0.5J/kg. Eine Obergrenze ergibt sich aus der maximalen Energie mit der die Partikel aufeinander oder gegen eine Oberfläche treffen dürfen, ohne dabei zu übermässiger Staubbildung zu neigen. Wird eine maximale Aufprallgeschwindigkeit von 20m/s angenommen so beträgt der Maximalwert für den durchschnittlichen spezifischen kinetischen Energieeintrag pro Stoss 200J/kg. Bei 10m/s ergeben sich 50J/kg.

Der kinetische Energieeintrag pro Stoss (Ez) berechnet sich aus der bewegten Masse (m) und der Aufprallgeschwindigkeit (v0) über Ez = (m / 2) * v0^2. Für den spezifischen kinetischen Energieeintrag pro Stoss muss dieser Wert wieder durch die Masse (m) geteilt werden. Die Aufprallgeschwindigkeit berechnet sich dabei aus v0 = 2 * h / t. Je nach Art der Bewegung entspricht h der Fallhöhe (bei Auf- und Abbewegung) oder der halben Amplitude (bei Hin- und Herbewegung). Dementsprechend entspricht t der Fallzeit oder einem Viertel der Zykluszeit.

Gemäss einer weiteren bevorzugten Ausführung beträgt die Intensität des Schüttelns, ausgedrückt als gesamter spezifischer kinetischer Energieeintrag, mehr als 200J/kg, insbesondere mehr als 400J/kg, besonders bevorzugt mehr als 800J/kg. Dadurch ist gewährleistet, dass sich die molekulare Oberflächenstruktur der Partikel ausreichend umlagert, um eine effektive Reduktion der Klebrigkeit im nachfolgenden Kristallisationsprozess zu gewährleisten. Eine Obergrenze ergibt sich aus dem Maximum der Anzahl Stösse mal der pro Stoss durchschnittlich übertragenen Energie, wobei diese Parameter nicht frei wählbar sind, sondern über die maximal erreichbare Beschleunigung gekoppelt sind. Wird zum Beispiel bei 5 Stössen pro Sekunde eine Beschleunigung von 200m/s^2 angenommen, so resultiert daraus eine Energie pro Stoss von 50J/kg, woraus sich über 30 Minuten ein gesamter spezifischer kinetischer Energieeintrag von maximal 900'000J/kg ergibt. Üblicherweise bleibt der gesamte spezifische kinetische Energieeintrag jedoch unter 60'000J/kg.

Der gesamte spezifische kinetische Energieeintrag (E) berechnet sich aus der Anzahl der Stösse mal dem durchschnittlichen spezifischen kinetischen Energieeintrag pro Stoss.

Das Schütteln durch Übertragung mechanischer Energie kann zum Beispiel in einem Apparat erfolgen, der eine Hin- und Herbewegung, eine Kreisbewegung, eine Auf- und Abbewegung, eine Taumelbewegung, eine Wippbewegung oder eine durch Kombination resultierende komplexe Bewegung ausführt, wodurch die Partikel alternierend beschleunigt und wieder gebremst werden. Beispiele dafür sind Rüttelsiebe, Plansichter, Plattform-Schüttler, Orbital- oder Kreis-Schüttler, Taumel-Schüttler, Wipp-Schüttler, 3-D Schüttler.

Das Schütteln kann auch in Apparaten erfolgen, in denen die Partikel mehrfach nach oben gefördert werden und anschliessend zurückfallen. Beispiele dafür sind Überkopf-Schüttler, Rotatoren. oder auch drehende Trommeln, in denen die Partikel mittels Einbauten (Produktmitnehmer) angehoben werden.

Anwendbar, aber weniger bevorzugt sind Apparate, in denen die Partikel durch Vibration gefördert werden. Beispiele dazu sind Vibrationsrinnen oder Wendelförderer. Derartige Geräte arbeiten üblicherweise bei Frequenzen im Bereich 50 - 200 Hertz, was nur eine geringe Energieübertragung pro Zyklus zulässt.

Nicht geeignet und somit für das erfindungsgemässe Verfahren ausgeschlossen sind Vorrichtungen, in denen relativ wenige, aber zum Teil sehr starke Stösse und/oder Scherkräfte auf die Partikel einwirken, da dadurch eine zu wenig gleichmässig auf die Oberfläche verteilte Behandlung erfolgt. Dazu gehören pneumatische Fördervorrichtungen, Fördervorrichtungen mittels rotierender Schnecken sowie gerührte Behälter.

Das indirekte Schütteln durch ein Fluid kann zum Beispiel in einem Fliessbett, Pulsbett-, Wirbelbett- oder Sprudelbettapparat erfolgen. Dabei durchströmt ein Fluid, insbesondere ein Prozessgas eine Schüttung von Polymerpartikeln derart, dass die Polymerpartikel verwirbelt werden. Durch die Verwirbelung werden die Partikel in die Höhe geschleudert und fallen anschliessend in das Produktbett zurück. Durch die Geschwindigkeit, mit der das Prozessgas die Schüttung durchströmt, und durch die geometrischen Verhältnisse der Schüttung (Höhe der Schüttung, Querschnitt der Schüttung) lassen sich die Bedingungen in der Wirbelschicht (Verwirbelungshöhe, Verwirbelungsfrequenz) beeinflussen. Eine weitere Beeinflussungsmöglichkeit besteht durch eine pulsierte Zugabe des Prozessgases. Geeignete Gasgeschwindigkeiten (gemessen als Leerrohrgeschwindigkeit) betragen zwischen 1 und 6 m/s, insbesondere zwischen 2 und 4m/s.

Gleichzeitig mit der Behandlung können weitere Prozessschritte erfolgen. So kann ein Aufheizen auf eine geeignet Behandlungstemperatur in der gleichen Vorrichtung statt finden, in der auch die Behandlung erfolgt, wofür sich zum Beispiel Fliessbett- oder Wirbelbettvorrichtungen, die mit einem beheizten Gas betrieben werden, eignen. Andererseits kann während der Behandlung eine Auftrennung der Partikel in verschiedene Fraktionen erfolgen, die sich durch ihre Partikelgrösse, Dichte oder andere Eigenschaften unterscheiden, wofür sich zum Beispiel Plansichter eignen, in denen während der Behandlung eine Abtrennung von unerwünscht grossen und/oder unerwünscht kleinen Partikeln erfolgt.

Bevorzugterweise erfolgt während der Behandlung keine Kristallisation. Die Partikel bleiben im Wesentlichen amorph. Üblicherweise beträgt der im DSC gemessene Anstieg der Kristallisationsenthalphie weniger als 5J/g. Die Kristallisationsenthalphie wird im DSC bei einer Aufheizrate von 10°C/Min gemessen. Die Kristallisationsenthalphie entspricht dabei der exothermen Wärmemenge, die im Bereich der Primärkristallbildung des Polymeren freigesetzt wird.

Beispielhafte Ausführungen sowie weitere Einzelheiten können den beigefügten Figuren und Beispielen entnommen werden.

### Beispiel 1

2.5kg Granulate aus Polyethylenterephthalat mit 2mol% Isophthalsäure Comonomergehalt, einem IV Wert von 0.4dl/g und einem Granulatgewicht von 15mg wurden in einem Zylinder mit Lochblech mit 20cm Durchmesser während 15 Minuten mit Luft mit einer Temperatur von 60°C so durchströmt, dass sich eine leichte Wirbelschicht ergab, deren mittlere Ausdehnung die ursprüngliche Füllhöhe um 8cm überstieg. Über einen Pulsator wurde eine Zykluszeit von 0.46 Sekunden eingestellt. Daraus resultiert ein spezifischer kinetische Energieeintrag von 0.78J/kg pro Stoss, respektive 1530J/kg insgesamt. Die Granulate blieben währen der ganzen Versuchszeit frei fliessend und durchsichtig amorph. Es haben sich keine Agglomerate gebildet.

### Beispiel 2

Beispiel 1 wurde wiederholt, allerdings mit Luft mit einer Temperatur von 80°C.
Die Granulate blieben währen der ganzen Versuchszeit frei fliessend und durchsichtig amorph. Es haben sich keine Agglomerate gebildet.

### Vergleichsbeispiel 1

Beispiel 1 wurde wiederholt allerdings mit Luft mit einer Temperatur von 90°C.
Die Granulate sind verklebt zu einem agglomerierten Block, blieben aber durchsichtig amorph. Eine weitere Verarbeitung war nicht möglich. Das Granulat wies einen Tg von 72.2°C und einen Tg Sprung von 87mW/g auf.

### Vergleichsbeispiel 2

Beispiel 1 wurde wiederholt, allerdings mit Luft mit einer Temperatur von 70°C und einer tiefen Gasgeschwindigkeit, die zu keiner Verwirbelung geführt hat.

Die Granulate blieben frei fliessend und durchsichtig amorph. Es haben sich keine Agglomerate gebildet.

### Beispiel 3

Die Granulate aus Beispiel 1 wurden im gleichen Zylinder während 8 Minuten mit Luft von 150°C bei einer Lehrrohrgeschwindigkeit von 1.7m/s durchströmt. Die Granulate sind verklebt zu einem agglomerierten Block und wurden opak kristallin. Der agglomerierte Block liess sich durch einen Druckstoss mit 0.5bar zu einzelnen Granulaten auflösen.

### Beispiel 4

Beispiel 3 wurde wiederholt, allerdings mit Granulaten aus Beispiel 2. Die Granulate sind verklebt zu einem agglomerierten Block und wurden opak kristallin. Der agglomerierte Block liess sich durch einen Druckstoss mit 0.5bar zu einzelnen Granulaten auflösen.

### Vergleichsbeispiel 3

Beispiel 3 wurde wiederholt, allerdings mit unbehandelten Granulaten. Das Granulat wies einen Tg von 69.7°C und einen Tg Sprung von 67mW/g auf. Die Granulate sind verklebt zu einem agglomerierten Block und wurden opak kristallin. Der agglomerierte Block liess sich auch durch 20 Druckstösse mit 0.5bar nicht auflösen.

### Vergleichsbeispiel 4

Beispiel 3 wurde wiederholt allerdings mit Granulaten aus Vergleichsbeispiel 2. Die Granulate sind verklebt zu einem agglomerierten Block und wurden opak kristallin. Der agglomerierte Block liess sich auch durch 20 Druckstösse mit 0.5bar nicht auflösen.

### Beispiel 5

Ein Polyethylenterephthalat mit 2mol% Isophthalsäure Comonomergehalt, einem IV Wert von 0.5dl/g wurde extrudiert und daraus Granulate mit einem Granulatgewicht von 18mg hergestellt. Direkt nach der Granulierung wurden 2.5kg Granulate in einem Zylinder mit Lochblech mit 20cm Durchmesser während 15 Minuten mit Luft mit einer Temperatur von 70°C so durchströmt, dass sich eine leichte Wirbelschicht ergab, deren mittlere Ausdehnung die ursprüngliche Füllhöhe um 8cm überstieg. Über einen Pulsator wurde eine Zykluszeit von 0.46 Sekunden eingestellt. Daraus resultiert ein spezifischer kinetischer Energieeintrag von 0.78J/kg pro Stoss, respektive 1530J/kg insgesamt.
Die Granulate blieben währen der ganzen Versuchszeit frei fliessend und durchsichtig amorph. Es haben sich keine Agglomerate gebildet. Das Granulat wies einen Tg von 72.5°C und einen Tg Sprung von 100mW/g auf.

### Beispiel 6

Beispiel 5 wurde wiederholt, allerdings nur während 5 Minuten, wodurch sich der gesamte spezifische kinetische Energieeintrag auf 510J/kg reduziert.

Die Granulate blieben währen der ganzen Versuchszeit frei fliessend und durchsichtig amorph. Es haben sich keine Agglomerate gebildet.

### Beispiel 7

Die Granulate aus Beispiel 5 wurden im gleichen Zylinder während 8 Minuten mit Luft von 175°C bei einer Lehrrohrgeschwindigkeit von 1.8m/s durchströmt. Die Granulate sind verklebt zu einem agglomerierten Block und wurden opak kristallin. Der agglomerierte Block liess sich durch einen Druckstoss mit 0.5bar zu einzelnen Granulaten auflösen.

### Beispiel 8

Beispiel 7 wurde wiederholt, allerdings mit Granulaten aus Beispiel 6. Die Granulate sind verklebt zu einem agglomerierten Block und wurden opak kristallin. Der agglomerierte Block liess sich durch 11 Druckstösse mit 0.5bar zu einzelnen Granulaten auflösen.

In Tabelle 1 sind die spezifische kinetische Energie gesamthaft und pro Stoss mit den Versuchsparametem und der Klebrigkeit zusammengefasst.

| Vorbehandlung | Kristallisation | T | t | Ez | E | Stösse | Bemerkung |
|---|---|---|---|---|---|---|---|
| Beispiel 1 | Beispiel 3 | 60°C | 15 min | 0.78J/kg | 1530J/kg | 1 | |
| Beispiel 2 | Beispiel 4 | 80°C | 15 min | 0.78J/kg | 1530J/kg | 1 | |
| V-Beispiel 1 | keine | 90°C | 12 min | - | - | - | verklebt |
| Keine | V-Beispiel 3 | - | - | - | - | >20 | verklebt |
| V-Beispiel 2 | V-Beispiel 4 | 70°C | 15 min | 0 | 0 | >20 | verklebt |
| Beispiel 5 | Beispiel 7 | 70°C | 15 min | 0.78J/kg | 1530J/kg | 1 | |
| Beispiel 6 | Beispiel 8 | 70°C | 5 min | 0.78J/kg | 510J/kg | 11 | |

In Tabelle 2 ist der Tg sowie der Tg Sprung mit den Versuchsparametem und der Klebrigkeit zusammengefasst.

| Vorbehandlung | Kristallisation | T | t | Tg | Tg Sprung | Stösse | Bemerkung |
|---|---|---|---|---|---|---|---|
| Beispiel 1 | Beispiel 3 | 60°C | 15 min | 72.2°C | 67mW/g | 1 | |
| V-Beispiel 1 | keine | 90°C | 12min | 72.2°C | 87mW/g | - | verklebt |
| Keine | V-Beispiel 3 | - | - | 69.7°C | 67mW/g | >20 | verklebt |
| Beispiel 5 | Beispiel 7 | 70°C | 15 min | 72.5°C | 100mW/g | 1 | |

### Beispiel 9

Das gleiche Material, das für Vergleichsbeispiel 3 verwendet wurde, wurde in einem Ofen auf 70°C vorgeheizt und anschliessend während 10 Minuten in einer Mischtrommel mit 40cm Durchmesser und 4 Produktmitnehmem bei 1 Umdrehung pro Sekunde behandelt. Wird eine Fallhöhe von 40cm und 2 Stösse pro Umdrehung angenommen, so resultiert ein spezifischer kinetische Energieeintrag von 3.9J/kg pro Stoss, respektive 9400J/kg insgesamt.

Die Granulate blieben währen der ganzen Versuchszeit frei fliessend und durchsichtig amorph. Es haben sich keine Agglomerate gebildet.

### Beispiel 10

Die Granulate aus Beispiel 9 wurden in einem Zylinder während 8 Minuten mit Luft von 175°C bei einer Lehrrohrgeschwindigkeit von 1.8m/s durchströmt. Die Granulate sind verklebt zu einem agglomerierten Block und wurden opak kristallin. Der agglomerierte Block liess sich durch einen Druckstoss mit 0.5bar zu einzelnen Granulaten auflösen.

### Beispiel 11

Das gleiche Material, das für Vergleichsbeispiel 3 verwendet wurde, wurde kontinuierlich mit einem Durchsatz von 400kg/h in einem pulsierten Fleissbett mit 0.3m2 Fläche behandelt. Das Granulat wurde mit 20°C zugeführt. Das Behandlungsgas wies eine Temperatur von 80°C auf. Dadurch hat sich das Granulat auf 74°C erwärmt. Die mittlere Verweilzeit der Behandlung (inklusive Aufheizen) betrug 3.6 Minuten. Die Gasgeschwindigkeit betrug 2m/s. Die Verwirbelungshöhe betrug 10cm. Über einen Pulsator wurde eine Zykluszeit von 0.5 Sekunden eingestellt. Daraus resultiert ein spezifischer kinetischer Energieeintrag von 1 J/kg pro Stoss, respektive 420J/kg insgesamt.

Die Granulate blieben während der ganzen Versuchszeit frei fliessend und durchsichtig amorph. Es haben sich keine Agglomerate gebildet. Das Granulat wies einen Tg von 75.1°C und einen Tg Sprung von 96mW/g auf.

### Beispiel 12

Die Granulate aus Beispiel 11 wurden in einem Zylinder während 8 Minuten mit Luft von 175°C bei einer Lehrrohrgeschwindigkeit von 1.8m/s durchströmt. Die Granulate sind verklebt zu einem agglomerierten Block und wurden opak kristallin. Der agglomerierte Block liess sich durch zwei Druckstösse mit 0.5bar zu einzelnen Granulaten auflösen.

In Tabelle 3 sind die spezifische kinetische Energie gesamthaft und pro Stoss mit den Versuchsparametem und der Klebrigkeit zusammengefasst.

| Vorbehandlung | Kristallisation | T | t | Ez | E | Stösse | Bemerkung |
|---|---|---|---|---|---|---|---|
| Keine | V-Beispiel 3 | - | - | - | - | >20 | verklebt |
| Beispiel 9 | Beispiel 10 | 70°C | 10 min | 3.9J/kg | 9400J/kg | 1 | |
| Beispiel 11 | Beispiel 12 | 70°C | 4 min | 1.0J/kg | 420J/kg | 2 | |

In Tabelle 4 ist der Tg sowie der Tg Sprung mit den Versuchsparametem und der Klebrigkeit zusammengefasst.

| Vorbehandlung | Kristallisation | T | t | Tg | Tg Sprung | Stösse | Bemerkung |
|---|---|---|---|---|---|---|---|
| Keine | V-Beispiel 3 | - | - | 69.7°C | 67mW/g | >20 | verklebt |
| Beispiel 9 | Beispiel 10 | 70°C | 10 min | | | 1 | |
| Beispiel 11 | Beispiel 12 | 70°C | 4 min | 75.1 °C | 96mW/g | 2 | |

Aus den Beispielen wird ersichtlich, dass komplexe Zusammenhänge zwischen der Temperatur, der Behandlungsdauer und Behandlungsstärke und der daraus resultierenden Änderung der Klebrigkeit und des Tg Sprungs bestehen. Allgemein kann beobachtet werden, dass sich die Behandlung mit zunehmender Dauer und Intensität und bei Behandlungstemperaturen nahe des Tg verbessert.
- Figur 1: zeigte eine Darstellung des Temperaturverlaufs einer ersten Ausführung des erfindungsgemässen Verfahrens.
- Figur 2: zeigt eine Darstellung des Temperaturverlaufs einer zweiten Ausführung des erfindungsgemässen Verfahrens.
- Figur 3: zeigt eine Darstellung des Temperaturverlaufs einer dritten Ausführung des efindungsgemässen Verfahrens.
- Figur 4: zeigt eine Darstellung des Temperaturverlaufs einer vierten Ausführung des erfindungsgemässen Verfahrens.
- Figur 5: ist eine Darstellung der Auswertung des Tg Sprungs.
- Figur 6: ist eine weitere Darstellung der Auswertung des Tg Sprungs.

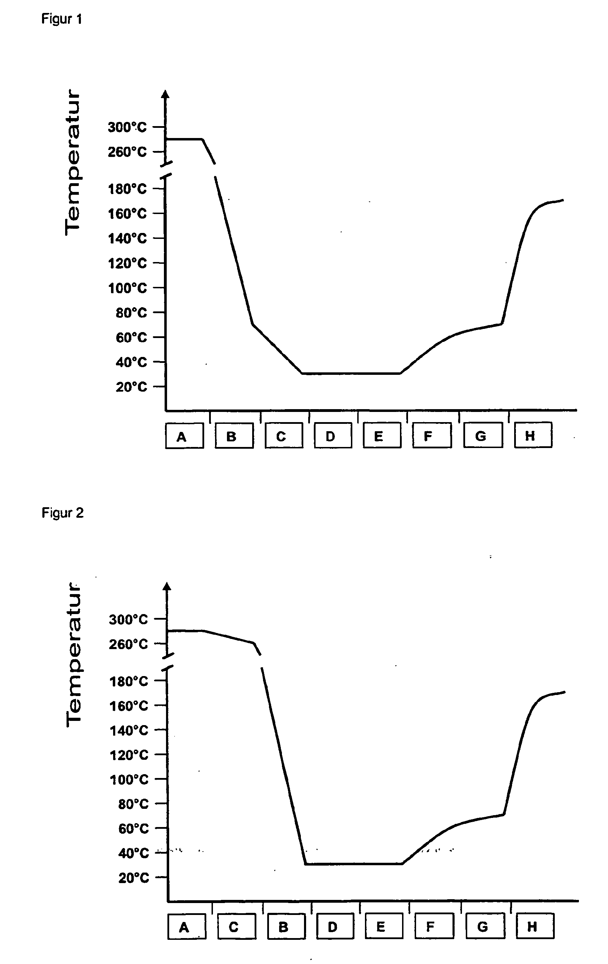

In den Figuren 1, 2 und 3 wird der Temperaturverlauf des erfindungsgemässen Verfahrens für die Herstellung von teilkristallinem Polyethylenterephthalat (PET) dargestellt. Dabei durchläuft das Polymer die angegebenen Prozessschritte A bis H:
A : Reaktor und Düse, Herstellen der Polymerschmelze und Formen von Strängen
B : Kühlstrecke, Kühlen der Stränge / Granulate
C : Granulation, Schneiden der Stränge zu Granulaten
D : Klassiersieb, Abtrennen von Feinanteil und Übergrössen
E : Puffer, Silos, Lagerung der Granulate
F : Erhitzer, Erhitzen der Granulate auf Behandlungstemperatur
G: Schüttelvorrichtung, Schütteln der Granulate
H : Kristallisator, Kristallisation der Granulate

Figur 1 bezieht sich auf ein Stranggranulationsverfahren zur Herstellung von zylinderförmigen Granulaten mit der Möglichkeit einer Zwischenlagerung und anschliessender unabhängiger Kristallisation.

Die PET Schmelze kommt mit ca. 280°C aus einem Polymerreaktor zu einer Düse und durchläuft dabei allfällige Pumpen, Mischer, Konditionierer und Filter. In der Düse wird eine Vielzahl an Polymersträngen gebildet. Die Polymerstränge werden mit Wasser abgekühlt und unter Wasser zu einzelnen Granulaten geschnitten. Anschliessend erfolgt eine Wasserabtrennung und eine Abtrennung von Staub und übergrossen Granulaten und Granulatagglomeraten. Die Granulate werden mit ca. 30°C in Lagersilos gefördert. Zu einem späteren Zeitpunkt werden die Granulate aus dem Silo entnommen und in einem Wirbelbettapparat auf ca. 70°C aufgeheizt. Gleichzeitig mit dem Aufheizen erfolgt ein Schütteln. Danach werden die Granulate auf ca. 170°C zur Kristallisation aufgeheizt und kristallisiert.

Figur 2 bezieht sich auf ein Unterwassergranulationsverfahren zur Herstellung von kugelförmigen Granulaten mit der Möglichkeit einer Zwischenlagerung und anschliessender unabhängiger Kristallisation.

Die PET Schmelze kommt mit ca. 280°C aus einem Polymerreaktor zu einer Düse und durchläuft dabei allfällige Pumpen, Mischer, Konditionierer und Filter. In der Düse wird eine Vielzahl an Polymersträngen gebildet. Die Polymerstränge werden direkt an der Düse zu einzelnen Granulaten geschnitten und mit Wasser abgekühlt. Anschliessend erfolgt eine Wasserabtrennung und eine Abtrennung von Staub und übergrossen Granulaten und Granulatagglomeraten. Die Granulate werden mit ca. 30°C in Lagersilos gefördert. Zu einem späteren Zeitpunkt werden die Granulate aus dem Silo entnommen und in einem Wirbelbettapparat auf ca. 70°C aufgeheizt. Gleichzeitig mit dem Aufheizen erfolgt ein Schütteln. Danach werden die Granulate auf ca. 170°C zur Kristallisation aufgeheizt und kristallisiert.

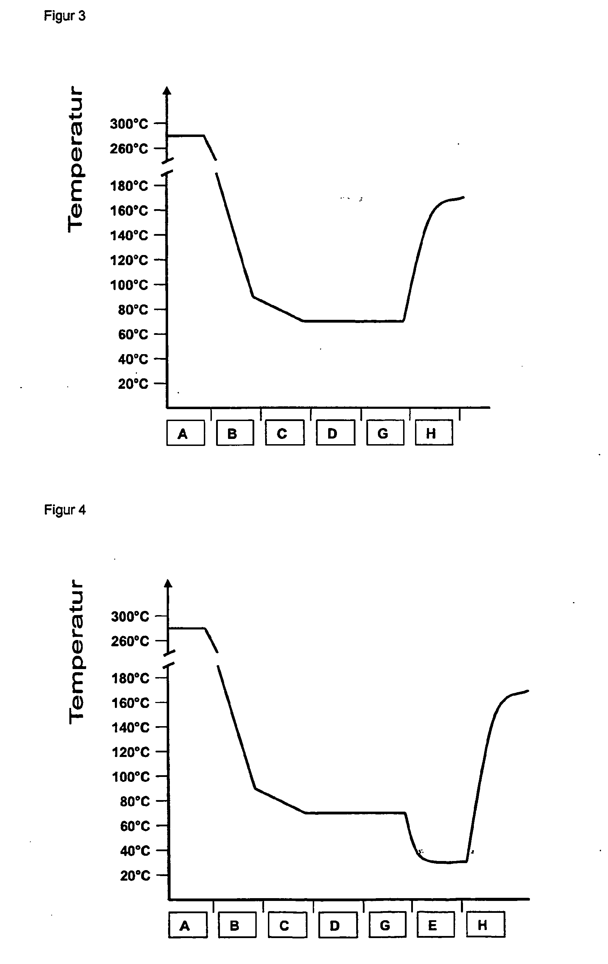

Figur 3 bezieht sich auf ein Stranggranulationsverfahren zur Herstellung von zylinderförmigen Granulaten mit direkter Verbindung zu der nachfolgenden Kristallisation.

Die PET Schmelze kommt mit ca. 280°C aus einem Polymerreaktor zu einer Düse und durchläuft dabei allfällige Pumpen, Mischer, Konditionierer und Filter. In der Düse wird eine Vielzahl an Polymersträngen gebildet. Die Polymerstränge werden mit Wasser abgekühlt und unter Wasser zu einzelnen Granulaten geschnitten. Anschliessend erfolgt eine Wasserabtrennung. Die Kühlbedingungen werden so gewählt, dass die Granulate mit ca. 70°C einer Sieb- und Schüttelvorrichtung zugeführt werden. Danach werden die Granulate auf ca. 170°C zur Kristallisation aufgeheizt und kristallisiert.

Figur 4 bezieht sich auf ein Stranggranulationsverfahren zur Herstellung von zylinderförmigen Granulaten mit der Möglichkeit einer Zwischenlagerung und anschliessender unabhängiger Kristallisation, wobei das Schütteln mit der Granulation gekoppelt ist.

Die PET Schmelze kommt mit ca. 280°C aus einem Polymerreaktor zu einer Düse und durchläuft dabei allfällige Pumpen, Mischer, Konditionierer und Filter. In der Düse wird eine Vielzahl an Polymersträngen gebildet. Die Polymerstränge werden mit Wasser abgekühlt und unter Wasser zu einzelnen Granulaten geschnitten. Anschliessend erfolgt eine Wasserabtrennung. Die Kühlbedingungen werden so gewählt, dass die Granulate mit ca. 70°C einer Sieb- und Schüttelvorrichtung zugeführt werden. Danach werden die Granulate abgekühlt und mit ca. 30°C in Lagersilos gefördert. Zu einem späteren Zeitpunkt werden die Granulate aus dem Silo entnommen, auf ca. 170°C zur Kristallisation aufgeheizt und kristallisiert.

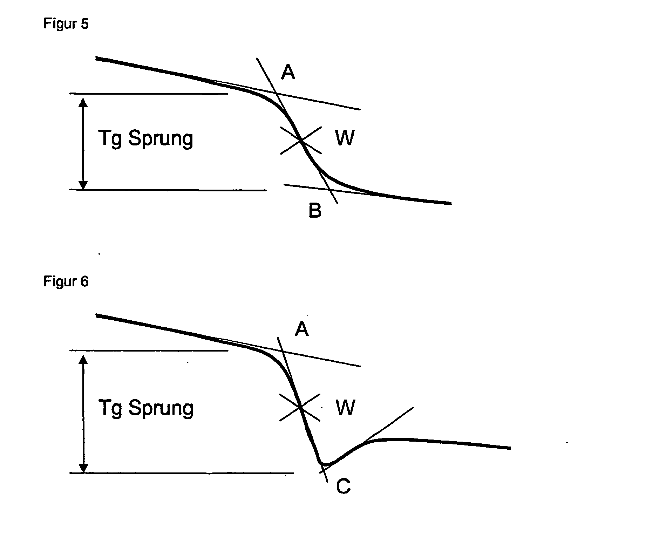

Figur 5 stellt einen typischen Verlauf einer DSC Kurve beim Überschreiten der Glasübergangstemperatur dar. Punkt W bezeichnet den Wendepunkt. Punkt A bezeichnet den Onset, gebildet aus verlängerter Basislinie und verlängerter Wendesteigung. Punkt B bezeichnet den Endset, gebildet aus verlängerter Basislinie und verlängerter Wendesteigung. Der Unterschied im Wärmefluss zwischen Punkt A und B entspricht dem Tg Sprung.

Figur 6 stellt einen typischen Verlauf einer DSC Kurve beim Überschreiten der Glasübergangstemperatur dar. Punkt W bezeichnet den Wendepunkt. Punkt A bezeichnet den Onset, gebildet aus verlängerter Basislinie und verlängerter Wendesteigung. Punkt C bezeichnet den Endset und entspricht dem extrapolierten Peak, gebildet aus der Peak-Endsteigung und verlängerter Wendesteigung. Der Unterschied im Wärmefluss zwischen Punkt A und C entspricht dem Tg Sprung.

## Patentansprüche

1. Verfahren zur Herstellung eines teilkristallinen Polymeren, welches die folgenden Schritte aufweist:
a) Herstellen einer Polymerschmelze aus einem kristallisierbaren Polymer;
b) Formen von Partikeln und Verfestigen der Polymerschmelzen, wobei das Formen der Partikel vor oder nach dem Verfestigen erfolgen kann;
c) Kühlen der Partikel;
d) Behandeln der Partikel zur Reduktion ihrer Klebeneigung;
e) Kristallisation der Partikel;
**dadurch gekennzeichnet, dass** das Behandeln zwischen dem Kühlen der Partikel und der Kristallisation der Partikel durch Schütteln für einen Zeitraum von mehr als 1 Minute bis zu weniger als 30 Minuten bei einer Temperatur T1 erfolgt, die unterhalb der Glasübergangstemperatur des Polymeren plus 10°C liegt, also T1 < Tg + 10°C, und die Kristallisation auf thermischen Weg unter Wärmezufuhr erfolgt.

2. Verfahren gemäss Anspruch 1, **dadurch gekennzeichnet, dass** das Behandeln ein Schütteln bei einer Temperatur T1 im Bereich Tg-60°C bis Tg+10°C, vorzugsweise im Bereich Tg-40°C bis Tg+5°C, umfasst.

3. Verfahren gemäss Anspruch 2, **dadurch gekennzeichnet, dass** im Fall des Schüttelns bei einer Temperatur T1 im Bereich Tg-60°C bis Tg+10°C das Kühlen der Partikel auf eine Temperatur T2 im Bereich Tg-60°C bis Tg+10°C, vorzugsweise im Fall des Schüttelns bei einer Temperatur T1 im Bereich Tg-40°C bis Tg+5°C das Kühlen der Partikel auf eine Temperatur T2 im Bereich Tg-40°C bis Tg+5°C erfolgt.

4. Verfahren gemäss Anspruch 2, **dadurch gekennzeichnet, dass** im Fall des Schüttelns bei einer Temperatur T1 im Bereich Tg-60°C bis Tg+10°C das Kühlen der Partikel auf eine Temperatur T2 unter Tg-60°C erfolgt und dass vor dem Schritt der Kristallisation ein weiterer Schritt zum Erhitzen auf eine Temperatur T1 im Bereich Tg-60°C bis Tg+10°C erfolgt, vorzugsweise im Fall des Schüttelns bei einer Temperatur T1 im Bereich Tg-40°C bis Tg+5°C das Kühlen der Partikel auf eine Temperatur T2 unter Tg-40°C erfolgt und dass vor dem Schritt der Kristallisation ein weiterer Schritt zum Erhitzen auf eine Temperatur T1 im Bereich Tg-40°C bis Tg+10°C erfolgt.

5. Verfahren gemass einem der vorhergehenden Ansprüche, **dadurch gekennzeichnet, dass** das Kühlen der Partikel in einem Kühlfluid erfolgt und dass vor der Behandlung der Partikel zur Reduktion ihrer Klebeneigung ein Trennen der Partikel von dem Kühlfluid erfolgt.

6. Verfahren gemäss einem der vorhergehenden Ansprüche, **dadurch gekennzeichnet, dass** die Intensität und Dauer des Schüttelns so gewählt wird, dass sich die Klebeneigung der Partikel im Kristallisationsprozess um zumindest einen Faktor 2 reduziert.

7. Verfahren gemäss einem der vorhergehenden Ansprüche, **dadurch gekennzeichnet, dass** die Intensität und Dauer des Schüttelns so gewählt wird, dass sich der Tg Sprung im DSC um zumindest einen Faktor 1.2, insbesondere um einen Faktor 1.3 vergrössert.

8. Verfahren gemäss einem der vorhergehenden Ansprüche, **dadurch gekennzeichnet, dass** das Schütteln durch Verwirbelung mit Hilfe eines Prozessgases oder durch mechanische Bewegung erfolgt.

9. Verfahren gemäss einem der vorhergehenden Ansprüche, **dadurch gekennzeichnet, dass** zwischen dem Schritt zum Kühlen der Partikel und dem Schritt zur Kristallisation ein Schritt zum Abtrennen von unerwünscht grossen und/oder unerwünscht kleinen Partikeln erfolgt.

10. Verfahren gemäss einem der vorhergehenden Ansprüche, **dadurch gekennzeichnet, dass** durch das Schütteln eine Vielzahl von Stössen auf die Partikel übertragen wird, wobei die durchschnittliche Anzahl Stösse auf die Partikel mehr als 150, bevorzugt mehr als 300, besonders bevorzugt von mehr als 500 erfolgt.

11. Verfahren gemäss einem der vorhergehenden Ansprüche, **dadurch gekennzeichnet, dass** durch das Schütteln eine Vielzahl von Stössen auf die Partikel übertragen wird, wobei ein spezifischer kinetischer Energieeintrag pro Stoss von mehr als 0.1J/kg, bevorzugt von mehr als 0.5J/kg, besonders bevorzugt von mehr als 1J/kg erfolgt.

12. Verfahren gemäss einem der vorhergehenden Ansprüche, **dadurch gekennzeichnet, dass** durch das Schütteln eine Vielzahl von Stössen auf die Partikel übertragen wird, wobei gesamthaft ein spezifischer kinetischer Energieeintrag von mehr als 200J/kg, bevorzugt von mehr als 400J/kg, besonders bevorzugt von mehr als 800J/kg erfolgt.

13. Verfahren gemäss einem der vorhergehenden Ansprüche, **dadurch gekennzeichnet, dass** es sich bei dem Polymeren um Polykondensate, insbesondere um Polyamide. Polyester, Polykarbonat, Polyhydroxyalkanoate, Polylaktide oder deren Copolymeren, handelt.

14. Verfahren gemäss Anspruch 13, **dadurch gekennzeichnet, dass** es sich bei dem Polyester um ein Polyethylenterephthalat oder eines seiner Co-Polymere handelt.

15. Verfahren gemäss Anspruch 14, **dadurch gekennzeichnet, dass** das Schütteln bei einer Temperatur im Bereich 30°C bis 85°C, vorzugsweise im Bereich 50°C bis 80°C erfolgt.

## Claims

1. Method for the preparation of a semicrystalline polymer, which has the following steps:
a) preparation of a polymer melt from a crystallizable polymer;
b) forming of particles and solidification of the polymer melts, it being possible to effect the forming of the particles before or after the solidification;
c) cooling of the particles;
d) treatment of the particles for reducing their tendency to agglomerate;
e) crystallization of the particles;
**characterized in that** the treatment is effected between the cooling of the particles and the crystallization of the particles by shaking for a period of time of more than 1 minute to less than 30 minutes at a temperature T1 which is below the glass transition temperature of the polymer plus 10°C, i.e. T1 < Tg + 10°C, and the crystallization is effected by a thermal method using heat.

2. Method according to Claim 1, **characterized in that** the treatment comprises shaking at a temperature T1 in the range from Tg-60°C to Tg+10°C, preferably in the range from Tg-40°C to Tg+5°C.

3. Method according to Claim 2, **characterized in that**, in the case of shaking at a temperature T1 in the range from Tg-60°C to Tg+10°C, the cooling of the particles is effected to a temperature T2 in the range Tg-60°C to Tg+10°C; preferably in the case of shaking at a temperature T1 in the range from Tg-40°C to Tg+5°C, the cooling of the particles is effected to a temperature T2 in the range from Tg-40°C to Tg+5°C.

4. Method according to Claim 2, **characterized in that**, in the case of shaking at a temperature T1 in the range from Tg-60°C to Tg+10°C the cooling of the particles is effected to a temperature T2 below Tg-60°C and **in that** a further step for heating to a temperature T1 in the range from Tg-60°C to Tg+10°C is effected before the crystallization step, preferably in the case of shaking at a temperature T1 in the range from Tg-40°C to Tg+5°C the cooling of the particles is effected to a temperature T2 below Tg-40°C and **in that** a further step for heating to a temperature T1 in the range from Tg-40°C to Tg+10°C is effected before the crystallization step.

5. Method according to any of the preceding claims, **characterized in that** the cooling of the particles is effected in a cooling fluid and **in that** separation of the particles from the cooling fluid is effected before the treatment of the particles for reducing their tendency to agglomerate.

6. Method according to any of the preceding claims, **characterized in that** the intensity and duration of the shaking are chosen so that the tendency of the particles to agglomerate in the crystallization process decreases by at least a factor of 2.

7. Method according to any of the preceding claims, **characterized in that** the intensity and duration of the shaking is chosen so that the Tg discontinuity in the DSC increases by at least a factor of 1.2, in particular by a factor of 1.3.

8. Method according to any of the preceding claims, **characterized in that** the shaking is effected by a fluidization with the aid of a process gas or by mechanical movement.

9. Method according to any of the preceding claims, **characterized in that** a step for separating off undesirably large and/or undesirably small particles is effected between the step for cooling the particles and the crystallization step.

10. Method according to any of the preceding claims, **characterized in that** a multiplicity of impacts is transmitted to the particles by the shaking, the average number of impacts on the particles being more than 150, preferably more than 300, particularly preferably more than 500.

11. Method according to any of the preceding claims, **characterized in that** a multiplicity of impacts is transmitted to the particles by the shaking, a specific kinetic energy input per impact of more than 0.1 J/kg, preferably of more than 0.5 J/kg, particularly preferably of more than 1 J/kg, being effected.

12. Method according to any of the preceding claims, **characterized in that** a multiplicity of impacts is transmitted to the particles by the shaking, altogether a specific kinetic energy input of more than 200 J/kg, preferably of more than 400 J/kg, particularly preferably of more than 800 J/kg, being effected.

13. Method according to any of the preceding claims, **characterized in that** the polymers are polycondensates, in particular polyamides, polyesters, polycarbonate, polyhydroxyalkanoates, polylactides or copolymers thereof.

14. Method according to Claim 13, **characterized in that** the polyester is a polyethylene terephthalate or one of its copolymers.

15. Method according to Claim 14, **characterized in that** the shaking is effected at a temperature in the range from 30°C to 85°C, preferably in the range from 50°C to 80°C.

## Revendications

1. Procédé pour la préparation d'un polymère partiellement cristallin, présentant les étapes suivantes :
a) préparation d'une masse fondue de polymère à partir d'un polymère cristallisable ;
b) façonnage de particules et solidification des masses fondues de polymère, le façonnage des particules pouvant avoir lieu avant ou après la solidification ;
c) refroidissement des particules ;
d) traitement des particules pour la réduction de la tendance à l'adhérence ;
e) cristallisation des particules ;
**caractérisé en ce que** le traitement entre le refroidissement des particules et la cristallisation des particules a lieu par agitation pendant un laps de temps de plus de 1 minute jusqu'à moins de 30 minutes à une température T1, qui est inférieure à la température de transition vitreuse du polymère plus 10°C, c'est-à-dire T1 < Tg + 10°C, et la cristallisation a lieu par voie thermique avec apport de chaleur.

2. Procédé selon la revendication 1, **caractérisé en ce que** le traitement comprend une agitation à une température T1 dans la plage de Tg-60°C à Tg+10°C, de préférence dans la plage de Tg-40°C à Tg+5°C.

3. Procédé selon la revendication 2, **caractérisé en ce que** dans le cas de l'agitation à une température T1 dans la plage de Tg-60°C à Tg+10°C, le refroidissement des particules a lieu à une température T2 dans la plage de Tg-60°C à Tg+10°C, de préférence dans le cas de l'agitation à une température T1 dans la plage de Tg-40°C à Tg+5°C, le refroidissement des particules a lieu à une température T2 dans la plage de Tg-40°C à Tg+5°C.

4. Procédé selon la revendication 2, **caractérisé en ce que** dans le cas de l'agitation à une température T1 dans la plage de Tg-60°C à Tg+10°C, le refroidissement des particules a lieu à une température T2 inférieure à Tg-60°C et **en ce que**, avant l'étape de la cristallisation, une autre étape pour le réchauffement à une température T1 dans la plage de Tg-60°C à Tg+10°C a lieu, de préférence dans le cas de l'agitation à une température T1 dans la plage de Tg-40°C à Tg+5°C, le refroidissement des particules a lieu à une température T2 inférieure à Tg-40°C et **en ce qu'**avant l'étape de la cristallisation, une autre étape pour le réchauffement à une température T1 dans la plage de Tg-40°C à Tg+10°C a lieu.

5. Procédé selon l'une quelconque des revendications précédentes, **caractérisé en ce que** le refroidissement des particules a lieu dans un fluide de refroidissement et **en ce qu'**avant le traitement des particules pour la réduction de leur tendance à l'adhérence, une séparation des particules du fluide de refroidissement a lieu.

6. Procédé selon l'une quelconque des revendications précédentes, **caractérisé en ce que** l'intensité et la durée de l'agitation sont choisies de manière telle que la tendance à l'adhérence des particules au cours du processus de cristallisation est réduite au moins d'un facteur 2.

7. Procédé selon l'une quelconque des revendications précédentes, **caractérisé en ce que** l'intensité et la durée de l'agitation sont choisies de manière telle que le saut de Tg dans la DSC augmente au moins d'un facteur 1,2, en particulier d'un facteur 1,3.

8. Procédé selon l'une quelconque des revendications précédentes, **caractérisé en ce que** l'agitation a lieu par fluidisation à l'aide d'un gaz de procédé ou par un mouvement mécanique.

9. Procédé selon l'une quelconque des revendications précédentes, **caractérisé en ce qu'**une étape de séparation de petites particules non souhaitées et/ou de grosses particules non souhaitées a lieu entre l'étape de refroidissement des particules et l'étape de cristallisation.

10. Procédé selon l'une quelconque des revendications précédentes, **caractérisé en ce que** par l'agitation, une multitude de chocs sont transférés aux particules, le nombre moyen de chocs sur les particules étant supérieur à 150, de préférence supérieur à 300, de manière particulièrement préférée supérieur à 500.

11. Procédé selon l'une quelconque des revendications précédentes, **caractérisé en ce que** par l'agitation, une multitude de chocs sont transférés aux particules, une introduction d'énergie cinétique spécifique par choc supérieure à 0,1 J/kg, de préférence supérieure à 0,5 J/kg, de manière particulièrement préférée supérieure à 1 J/kg ayant lieu.

12. Procédé selon l'une quelconque des revendications précédentes, **caractérisé en ce que** par l'agitation, une multitude de chocs sont transférés aux particules, une introduction d'énergie cinétique totale supérieure à 200 J/kg, de préférence supérieure à 400 J/kg, de manière particulièrement préférée supérieure à 800 J/kg ayant lieu.

13. Procédé selon l'une quelconque des revendications précédentes, **caractérisé en ce qu'**il s'agit, pour les polymères, de produits de polycondensation, en particulier de polyamides, de polyesters, de polycarbonates, de polyhydroxyalcanoates, de polylactides ou de leurs copolymères.

14. Procédé selon la revendication 13, **caractérisé en ce qu'**il s'agit, pour les polyesters, d'un poly(téréphtalate d'éthylène) ou d'un de ses copolymères.

15. Procédé selon la revendication 14, **caractérisé en ce que** l'agitation a lieu à une température dans la plage de 30°C à 85°C, de préférence dans la plage de 50°C à 80°C.
